# EUROPÄISCHE PATENTSCHRIFT

(11) **EP 3 258 814 B1**
(45) Veröffentlichungstag und Bekanntmachung des Hinweises auf die Patenterteilung: **12.08.2020**
(21) Anmeldenummer: 16703933.8
(22) Anmeldetag: 27.01.2016
(51) Int. Cl.: A47B 96/20

(54) **KANTENLEISTE**
EDGE STRIP
BANDE DE CHANT

(30) Priorität: 19.02.2015 DE 202015100800 U
(43) Veröffentlichungstag der Anmeldung: 27.12.2017
(73) Patentinhaber: SURTECO GmbH, 86647 Buttenwiesen (DE)
(72) Erfinder: SCHUNCK, Stephan, 48151 Münster (DE); PETRAKIS, Jordanis, 42277 Wuppertal (DE); SCHULTE, Peter, 58638 Iserlohn (DE)
(74) Vertreter: von dem Borne, Andreas
(86) Internationale Anmeldenummer: PCT/EP2016/051617
(87) Internationale Veröffentlichungsnummer: WO 2016/131615

(56) Entgegenhaltungen:
- DE-A1-102010 051 291
- DE-A1-102013 014 111
- DE-U1-202006 017 983
- DE-U1-202013 103 738
- GB-A- 2 355 398

## Beschreibung

Die Erfindung betrifft eine Kantenleiste für die Befestigung an einem Werkstück, insbesondere für die Schmalflächenbeschichtung einer Möbelplatte, einer Arbeitsplatte oder dergleichen Werkstoffplatte. Eine solche Kantenleiste bzw. Deckleiste wird auch einfach als Kante oder Kantenband oder auch als Umleimer bezeichnet. Sie dient bevorzugt der Beschichtung der Schmalflächen bzw. Stirnflächen von Werkstoffplatten, das heißt plattenförmigen Werkstücken, wie z. B. Möbelplatten oder Arbeitsplatten (z. B. Küchenarbeitsplatten). Solche Werkstoffplatten sind z. B. als Holzplatten oder Holzwerkstoffplatten (z. B. Spanplatten, Faserplatten oder dergleichen) oder auch als Verbundplatten ausgebildet. Die Befestigung der Kantenleiste an der jeweiligen Werkstoffplatte erfolgt z. B. in herkömmlicher Weise mittels Schmelzklebstoffen. Die Kantenleisten können aber auch bereits im Zuge der Fertigung mit einer Schmelzschicht bzw. Funktionalschicht versehen werden, die dann bei der Verarbeitung mit geeigneten Quellen (z. B. Laserstrahlung, Heißluft, Plasma, Mikrowelle oder dergleichen) aufgeschmolzen wird. Die Kantenleiste ist bevorzugt aus thermoplastischem Kunststoff gefertigt.

Eine Kantenleiste der eingangs beschriebenen Art ist z. B. aus der EP 0 857 442 A2 bekannt. Die Kantenleiste weist einen transparenten Leistenkörper oder Leistenkern auf und rückseitig auf diesem transparenten Leistenkern ist eine Dekorbeschichtung oder Farbbeschichtung angeordnet. Diese Kantenleiste wird in der Praxis auch als "3D-Kante" bezeichnet. Die Kante wird mit ihrer Unterseite bzw. Rückseite, auf der die Dekorbeschichtung oder Farbbeschichtung angeordnet ist, auf der Stirnfläche der Möbelplatte befestigt, so dass das Dekor durch den transparenten Leistenkörper hindurch sichtbar bleibt, und zwar auch nach einer nachträglichen spanabhebenden Oberflächenbearbeitung der Kunststoffleiste. Die Oberseite und/oder Unterseite der transparenten Leiste kann mit einer Prägung versehen sein, so dass in gewissem Maße eine Strukturierung der Oberfläche möglich ist.

Die DE 20 2014 103 706 U1 beschreibt eine 3D-Kante, bei welcher in den Leistenkörper Lamellen integriert sind, so dass der optische Eindruck der Leiste insbesondere von dem Betrachtungswinkel abhängt.

Außerdem kennt man aus der DE 200 16 842 U1 eine Profilleiste mit einem transparenten Leistenkern, wobei im Innern der Profilleiste ein Dekorstreifen angeordnet ist, der von der Profilleiste umschlossen ist. Auf diese Weise soll vermieden werden, dass der Dekorstreifen im Zuge der Verarbeitung und insbesondere bei einer nachträglichen Profilierung beschädigt wird. GB 2 355 398 A offenbart eine weitere bekannte Kantenleiste des Standes der Technik.

Die bekannten 3D-Kanten (z. B. gemäß EP 0 857 442 A2) haben sich in der Praxis hervorragend bewährt, sie sind jedoch hinsichtlich des Aufbaus und der Designvielfalt weiterentwicklungsfähig. - Hier setzt die Erfindung ein.

Der Erfindung liegt die Aufgabe zugrunde, eine Kantenleiste der eingangs beschriebenen Art zu schaffen, welche sich bei einfacher und kostengünstiger Herstellung durch ein besonderes Design auszeichnet, ohne dass die Haltbarkeit und die Reinigungsmöglichkeit beeinträchtigt wird.

Zur Lösung dieser Aufgabe lehrt die Erfindung eine Kantenleiste gemäß Anspruch 1.

Oberseite im Sinne des Anspruchs 1 meint dabei die im montierten Zustand an einem Werkstück die Sichtseite bildende Seite der Kantenleiste und Unterseite meint die im montierten Zustand dem Werkstück bzw. der Verarbeitungsfläche zugewandten Seite. Bevorzugt sind die Grundschicht und die Deckschicht stoffschlüssig miteinander verbunden. Dazu ist es besonders bevorzugt vorgesehen, dass die Grundschicht und die Deckschicht durch Coextrusion oder Post-Coextrusion oder durch Nachbeschichtung hergestellt sind.

Die Erfindung geht dabei von der Erkenntnis aus, dass sich eine 3D-Kante mit besonderen optischen Eigenschaften im Sinne einer Oberflächenstrukturierung herstellen lässt, indem die Strukturierung nicht in die (transparente) Oberfläche der Kantenleiste direkt eingebracht wird, sondern indem eine Grundschicht mit strukturierter Oberfläche zur Verfügung gestellt wird, welche mit einer transparenten oder transluzenten Deckschicht abgedeckt wird. Die strukturierte Grundschicht ist folglich durch die transparente oder transluzente Deckschicht hindurch sichtbar, so dass insgesamt der Eindruck einer strukturierten Kantenleiste entsteht. Dennoch kann eine Kantenleiste mit einwandfreier, planer Oberfläche zur Verfügung gestellt werden, so dass die Kantenleiste insgesamt sehr reinigungsfreundlich ist. Da die Strukturierung der Grundschicht durch die aufgebrachte Deckschicht abgedeckt ist, ist die Struktur auch hervorragend vor Beschädigungen geschützt.

Strukturierung der Grundschicht meint dabei eine Strukturierung, die in Querrichtung der Kante sichtbar ist, das heißt die Erhebungen und Vertiefungen der Strukturierung verlaufen entlang der Längsrichtung der Kantenleiste (das heißt, z. B. der Extrusionsrichtung), so dass sich eine solche Strukturierung sehr einfach im Zuge der Herstellung durch geeignete Ausgestaltung des Extrusionswerkzeuges herstellen lässt.

Die Deckschicht deckt die strukturierte Grundschicht ab, so dass die Deckschicht bevorzugt mit einer Unterseite ausgestaltet ist, deren Strukturierung über die gesamte Breite oder gegebenenfalls einen Teil der Breite komplementär zu der Strukturierung der Oberseite der Grundschicht ausgebildet ist. Zwischen Deckschicht und Grundschicht ist folglich eine strukturierte Grenzschicht verwirklicht. Jedenfalls lassen sich sichtbare, tiefe und prägnante Oberflächenstrukturen erzeugen.

So besteht z. B. die Möglichkeit, dass die Grundschicht gefärbt bzw. deckend eingefärbt und folglich nicht transparent und auch nicht transluzent ausgebildet ist. Durch die transparente oder transluzente Deckschicht ist dann die Grundschicht mit ihrer strukturierten Oberfläche sichtbar. In abgewandelter Ausführungsform besteht die Möglichkeit, dass auch die Grundschicht transparent oder transluzent ausgebildet ist, jedoch gegebenenfalls in einer abweichenden Einfärbung oder einem abweichenden Transparenzgrad, so dass die Grundschicht mit ihrer strukturierten Oberfläche aufgrund der abweichenden optischen Eigenschaften durch die Deckschicht hindurch sichtbar ist.

Ferner besteht die Möglichkeit, dass die Oberseite der Grundschicht mit einem durch die Deckschicht hindurch sichtbaren Dekor, z. B. einem Dekordruck, einer Dekorfolie oder einer Farbbeschichtung versehen ist. Insgesamt bestehen im Rahmen der Erfindung vielfältige Möglichkeiten, um eine 3D-Kante mit Struktureinbettung zu realisieren.

Dabei besteht außerdem die Möglichkeit, dass die Unterseite der Grundschicht mit einem Dekor, z. B. einem Dekordruck, einer Dekorfolie oder einer Farbbeschichtung versehen ist. Diese Option ist insbesondere dann zweckmäßig, wenn nicht nur die Deckschicht, sondern auch die Grundschicht aus einem transparenten oder transluzenten Material besteht, so dass das unterseitige Dekor dann durch die Deckschicht und die Grundschicht hindurch sichtbar ist. Durch die gegebenenfalls unterschiedlichen optischen Eigenschaften von Deckschicht und Grundschicht kommt der "inneren" Strukturierung aber auch bei dieser Ausführungsform eine besondere Bedeutung zu.

Die Unterseite der Grundschicht dient der Befestigung an einem Werkstück, z. B. an einer Schmalfläche einer Möbelplatte. Die Befestigung an dem Werkstück kann in grundsätzlich bekannter Weise erfolgen. So besteht die Möglichkeit, dass die Unterseite der Grundschicht mit einer Haftvermittlerschicht versehen ist, so dass die Befestigung anschließend im Wege einer herkömmlichen Verklebung möglich ist. Alternativ liegt es im Rahmen der Erfindung, dass die Unterseite der Grundschicht mit einer Schmelzschicht bzw. Funktionalschicht versehen ist, die im Zuge der Verarbeitung mit geeigneten Quellen, z. B. Laserstrahlung, Heißluft, Plasma oder dergleichen, aufschmelzbar ist. Sofern die Unterseite der Grundschicht mit dem oben erwähnten Dekor versehen ist, versteht es sich, dass die Haftvermittlerschicht oder die Schmelzschicht unterseitig bzw. rückseitig auf dieses Dekor aufgebracht ist.

Dabei ist es zweckmäßig, wenn die Unterseite der Grundschicht plan, das heißt nicht profiliert und nicht strukturiert, ausgebildet ist.

Außerdem ist es zweckmäßig, dass auch die Oberseite der Deckschicht - mit Ausnahme der Randbereiche - plan bzw. glatt oder gewölbt (jedoch trotzdem mit glatter Oberfläche) und folglich nicht profiliert und nicht strukturiert ausgebildet ist. Optional liegt es jedoch ebenso im Rahmen der Erfindung, dass die Oberseite der Deckschicht mit einer Prägung oder ähnlichen Strukturierung versehen ist.

Die Oberseite der Deckschicht kann im Übrigen mit einer Veredelung, z. B. einer Folienbeschichtung (z. B. Metallisierung) oder auch einer Lackierung versehen sein.

Bei den für die Herstellung der Kantenleiste verwendeten thermoplastischen Kunststoffen kann auf grundsätzlich bekannte Kunststoffe zurückgegriffen werden. So kann die Grundschicht aus PMMA, PS, ABS, PVC, PC, PET, TPU, PP, PP-Copo., PE-Copo., EVA, EMA usw. hergestellt sein.

Die Deckschicht kann aus PMMA, PS, ABS, PVC, PC, PET, TPU, PP, PP-Copo., PE-Copo., EVA, EMA usw. hergestellt sein.

Folgende Materialkombinationen können besonders bevorzugt eingesetzt werden:
Grundschicht aus PVC, Deckschicht aus TPU.
Grundschicht aus PS, Deckschicht aus PMMA.
Grundschicht aus PMMA, Deckschicht aus PMMA.
Grundschicht aus ABS, Deckschicht aus PMMA,
Grundschicht aus ABS, Deckschicht aus EVA,
Grundschicht aus EVA, Deckschicht aus PMMA,
Grundschicht aus PP, Deckschicht aus PP-Copo..

Die eingesetzten thermoplastischen Kunststoffe für die Grund- und Deckschicht können sich in der Härte unterscheiden (hart-hart, hart-weich, weich-weich, weich-hart). Das bedeutet, dass die Grundschicht härter als die Deckschicht oder weicher als die Deckschicht ausgebildet sein kann oder dass Grundschicht und Deckschicht dieselbe Härte aufweisen.

Dabei liegt es im Rahmen der Erfindung, dass die Strukturschicht einerseits und die Deckschicht andererseits aus unterschiedlichen thermoplastischen Kunststoffen hergestellt sind. Zumindest ist es zweckmäßig, wenn der thermoplastische Grundstoff der Grundschicht und der thermoplastische Kunststoff der Deckschicht unterschiedliche optische Eigenschaften aufweisen, so dass durch geeignete Polymerpaarungen und/oder geeignete Zusatzstoffe die gewünschten optischen Eigenschaften erreicht werden.

Die Dicke der Kantenleiste kann 1 mm bis 10 mm betragen. Die Breite der Kantenleiste kann 2 mm bis 100 mm betragen.

Durch den erfindungsgemäßen Aufbau aus Grundschicht und Deckschicht lassen sich Strukturierungen mit großen Strukturtiefen erzeugen. So kann die Gesamttiefe bzw. Gesamtdicke der Strukturierung bis zu 2/3 der Gesamtdicke (bzw. Gesamthöhe) der Kantenleiste betragen.

Die Trennung zwischen Grundschicht und Deckschicht kann in unterschiedlicher Tiefe angeordnet sein. So kann die mittlere Dicke der Deckschicht 10 % bis 80 % der mittleren Dicke der Grundschicht betragen.

Bei der Strukturierung kann es sich bevorzugt um eine über die Breite der Kantenleiste verlaufende kantige bzw. zackige Strukturierung handeln, die folglich mehrere Unstetigkeitsstellen aufweist. Es liegt jedoch ebenso im Rahmen der Erfindung, dass die Strukturierung im Sinne einer Profilierung eine konkave oder konvexe Struktur bildet. Damit kann die Struktur z. B. einen Reflektor für eine Lichtfokussierung bilden.

Alternativ liegt es auch bevorzugt im Rahmen der Erfindung, dass die Strukturierung eine Nut bildet, welche der Aufnahme von z. B. LED-Lichtbändern, Schnüren, Gewebebändern, Fasern, Metallstreifen oder Echtholzfurnieren dient, so dass solche LED-Lichtbänder oder Einlegeteile vor der Nachbeschichtung mit der Deckschicht eingelegt und somit in die Kantenleiste integriert werden können.

Insgesamt können erfindungsgemäß besonders tiefe Strukturen, Konturen und Raumformen in das Kantenband integriert werden, da diese Strukturen z. B. im Wege der Extrusion durch Ausgestaltung des Extrusionswerkzeuges erzeugt werden.

Es liegt im Rahmen der Erfindung, dass die Deckschicht die Grundschicht vollständig abdeckt, so dass die Deckschicht vollständig die Sichtfläche der Kantenleiste bildet. Alternativ liegt es jedoch auch im Rahmen der Erfindung, dass die Deckschicht die Grundschicht nur teilweise abdeckt, so dass die Deckschicht auch nur teilweise die Sichtfläche bildet und folglich auch nicht abgedeckte Teile der Grundschicht freiliegen und folglich die Sichtfläche bilden.

Die Dickenverteilung bzw. Stärkenverteilung der Grundschicht zu der Deckschicht kann über die Leistenbreite symmetrisch oder alternativ auch asymmetrisch ausgestaltet sein.

Im Folgenden wird die Erfindung anhand von lediglich Ausführungsbeispiele darstellenden Zeichnungen näher erläutert. Es zeigen:
- Fig. 1: eine Möbelplatte mit einer daran befestigten Kantenleiste,
- Fig. 2: den Gegentand nach Fig. 1 in einer abgewandelten Ausführungsform,
- Fig. 3: eine Kantenleiste in einer weiteren Ausführungsform und
- Fig. 4: den Gegenstand nach Fig. 3 in abgewandelter Ausführungsform,
- Fig. 5 bis 8: weitere Ausführungsformen der Erfindung.

In den Figuren sind Kantenleisten 1 für die Befestigung an einem Werkstück, insbesondere für die Schmalflächenbeschichtung von Möbelplatten 2 oder dergleichen Werkstoffplatten dargestellt.

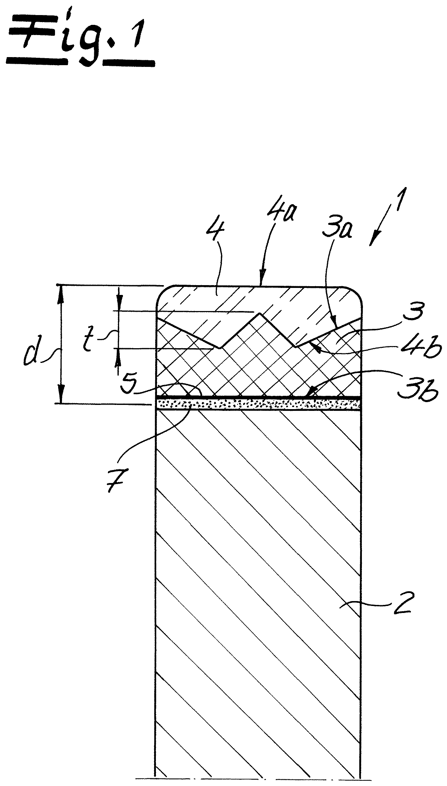

In Fig. 1 ist eine solche Möbelplatte 2 mit einer daran stirnseitig befestigten Kantenleiste 1 schematisch vereinfacht gezeigt. Dabei handelt es sich um eine herkömmliche Möbelplatte 2. Die Erfindung betrifft die Ausgestaltung der Kantenleiste 1.

Diese Kantenleiste weist eine Grundschicht 3 und eine Deckschicht 4 auf, die jeweils aus thermoplastischem Kunststoff hergestellt sind, und zwar z. B. durch Coextrusion, Post-Coextrusion oder auch im Sinne einer Nachbeschichtung.

Die Unterseite 3b der Grundschicht 3 ist der Möbelplatte 2 zugewandt, sie dient der Befestigung an der Möbelplatte 2. Die der Möbelplatte 2 abgewandte Oberseite 3a der Grundschicht 3 ist strukturiert ausgebildet. Auf der Grundschicht 3 ist die Deckschicht 4 angeordnet, wobei in dem dargestellten Ausführungsbeispiel die Unterseite 4b der Deckschicht 4 ebenfalls entsprechend profiliert ist. Die Deckschicht 4 grenzt folglich mit ihrer profilierten/strukturierten Unterseite 4b an die profilierte Oberseite 3a der Grundschicht 3. Zumindest die Deckschicht 4 ist dabei aus einem transparenten oder transluzenten thermoplastischen Kunststoff gefertigt, so dass die profilierte Oberseite 3a der Grundschicht 3 durch die Deckschicht 4 hindurch sichtbar ist.

Dabei besteht die Möglichkeit, dass die Oberseite 3a der Grundschicht 3 bedruckt oder foliert ist, so dass der oberseitige Druck oder die Folie durch die Deckschicht 4 hindurch sichtbar ist. Einzelheiten sind dazu in den Figuren nicht dargestellt. Fig. 1 zeigt dabei eine Ausführungsform, bei welcher die Unterseite 3a der Grundschicht 3 mit einer Haftvermittlerschicht 5 versehen ist, wobei die Kantenleiste 1 im Zuge der Verarbeitung mit einem herkömmlichen Klebstoff, z. B. einem Schmelzklebstoff 7 an der Möbelplatte 2 befestigt ist.

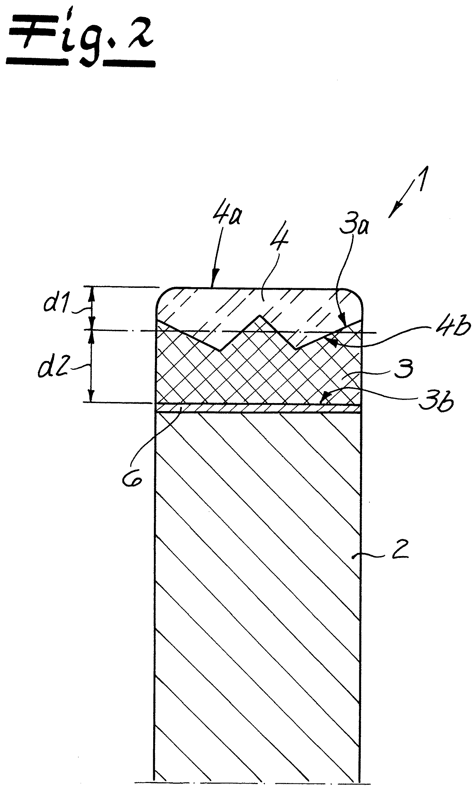

Fig. 2 zeigt eine abgewandelte Ausführungsform, bei welcher die Grundschicht 3 unterseitig mit einer Schmelzschicht 6 vorbeschichtet ist, welche eine Funktionalschicht bildet, wobei diese Funktionalschicht z. B. mittels Laserstrahlung oder einer anderen Quelle aufgeschmolzen wird, um die Kantenleiste 1 an der Möbelplatte 2 zu befestigen.

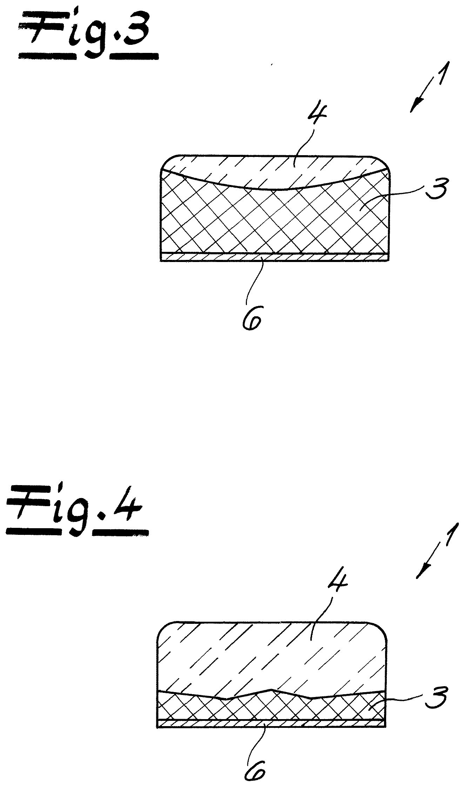

Die Strukturierungen können in unterschiedlicher Weise ausgebildet sein. Dazu sind weitere Beispiele in den Fig. 3 und 4 dargestellt, wobei diese Figuren die Kantenleiste 1 ohne Möbelplatte zeigen. Während die Fig. 1, 2 und 4 Ausführungsformen mit kantigen Strukturierungen zeigen, ist in Fig. 3 eine Ausführungsform dargestellt, bei welcher die Strukturierung im Sinne einer Profilierung konkav oder konvex ausgebildet sein kann, um z. B. einen Reflektor zu bilden.

Im Übrigen ist in den Figuren angedeutet, dass sich die Strukturierung über eine sehr große Strukturtiefe t erstrecken kann. Diese Strukturtiefe t kann bis zu 2/3 der Gesamtdicke d der Kantenleiste betragen. Strukturtiefe t meint dabei den vertikalen Abstand zwischen den maximalen Erhebungen und Vertiefungen der Struktur. Die mittlere Dicke d1 der Deckschicht kann 10 % bis 80 % der mittleren Dicke d2 der Grundschicht betragen.

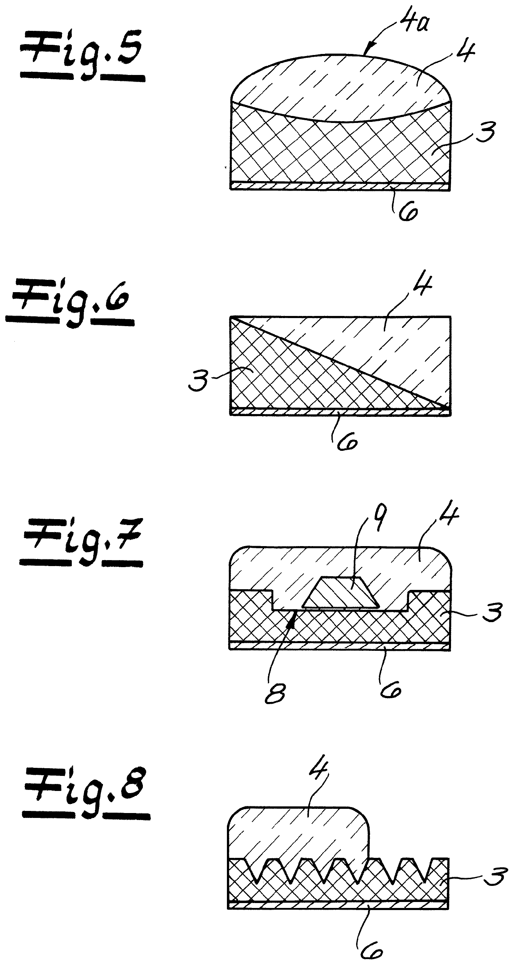

Wie bereits erläutert ist die Oberseite 4a bzw. Oberfläche der Deckschicht 4 plan und glatt ausgebildet. Dieses schließt jedoch nicht aus, dass die Oberseite 4a - so wie in Fig. 5 gezeigt - eine gewölbte bzw. gekrümmte (aber dennoch glatte) Oberfläche aufweist, z. B. eine konvex gekrümmte oder konkav gekrümmte Oberfläche.

Im Übrigen liegt es gemäß Fig. 6 im Rahmen der Erfindung, dass die Dickenverteilung bzw. Stärkenverteilung der Grundschicht zu der Deckschicht über die Leistenbreite asymmetrisch ist. Fig. 6 zeigt dazu ein Beispiel, in welchem die Dicke der Grundschicht 3 von links nach rechts abnimmt und dementsprechend die Dicke der Deckschicht 4 von links nach rechts zunimmt. Die Strukturierung wird folglich hier von einer "schräg verlaufenden" Grenzfläche gebildet.

Fig. 7 zeigt eine abgewandelte Ausführungsform, bei welcher die Strukturierung eine Nut 8 bildet, welche der Aufnahme eines Einlegeteils 9 dient. In dem dargestellten Ausführungsbeispiel ist als Einlegeteil ein LED-Lichtband dargestellt.

Die Fig. 1 bis 7 zeigen dabei Ausführungsbeispiele, bei denen die Deckschicht 4 die Grundschicht 3 vollständig abdeckt, so dass die Sichtfläche vollständig von der Deckschicht 4 gebildet wird.

Demgegenüber zeigt Fig. 8 eine abgewandelte Ausführungsform, bei welcher die Deckschicht 4 die Grundschicht 3 (über die Breite) nur teilweise abdeckt, so dass ein Teil der Grundschicht 3 ohne Abdeckung durch die Deckschicht 4 freiliegt und damit einen Teil der Sichtfläche der Leiste bildet.

## Patentansprüche

1. Kantenleiste (1) für die Schmalflächenbeschichtung von Werkstoffplatten (2), insbesondere von Möbelplatten oder Arbeitsplatten, mit
- einer Grundschicht (3) aus einem thermoplastischen Kunststoff, deren Oberseite (3a) strukturiert ist und
- einer auf der Grundschicht (3) angeordneten Deckschicht (4) aus einem transparenten oder transluzenten thermoplastischen Kunststoff,
wobei die Deckschicht (4) mit ihrer Oberseite (4a) vollständig oder teilweise die Sichtfläche der Kantenleiste bildet und mit ihrer Unterseite (4b) vollständig oder teilweise an die profilierte Oberseite (3a) der Grundschicht (3) angrenzt,
wobei die Oberseite (4a) der Deckschicht (4) plan oder gewölbt ausgebildet ist und die Unterseite (4b) der Deckschicht (4) über die gesamte Breite oder einen Teil der Breite komplementär zu der Strukturierung der Oberseite (3a) der Grundschicht (3) ausgebildet ist, sodass die Deckschicht eine sich über die Leistenbreite verändernde Dicke aufweist,
wobei die Grundschicht (3) und die Deckschicht (4) durch Coextrusion hergestellt und miteinander verbunden sind
und wobei die Grundschicht (3) deckend eingefärbt ist.

2. Kantenleiste nach Anspruch 1, **dadurch gekennzeichnet, dass** die Grundschicht (3) und die Deckschicht (4) stoffschlüssig miteinander verbunden sind.

3. Kantenleiste nach einem der Ansprüche 1 bis 2, **dadurch gekennzeichnet, dass** die Unterseite (3b) der Grundschicht (3) mit einem Dekor, z. B. einem Dekordruck, einer Dekorfolie oder einer Farbbeschichtung versehen ist, welche bevorzugt durch die Deckschicht und die Grundschicht hindurch sichtbar ist.

4. Kantenleiste nach einem der Ansprüche 1 bis 3, **dadurch gekennzeichnet, dass** die Oberseite (3a) der Grundschicht (3) mit einem durch die Deckschicht (4) hindurch sichtbaren Dekor, z. B. einem Dekordruck, einer Dekorfolie oder einer Farbbeschichtung versehen ist.

5. Kantenleiste nach einem der Ansprüche 1 bis 4, **dadurch gekennzeichnet, dass** die Unterseite (3b) der Grundschicht (3) für die Befestigung an einem Werkstück (2) mit einer Haftvermittlerschicht (5) oder einer Schmelzschicht (6) versehen ist.

6. Kantenleiste nach einem der Ansprüche 1 bis 5, **dadurch gekennzeichnet, dass** die Unterseite (3b) der Grundschicht (3) plan ausgebildet ist.

7. Kantenleiste nach einem der Ansprüche 1 bis 6, wobei die Oberseite der Deckschicht glatt ausgebildet ist.

8. Kantenleiste nach einem der Ansprüche 1 bis 7, **dadurch gekennzeichnet, dass** die Oberseite (4a) der Deckschicht (4) mit einer Veredelung, z. B. einer Folie oder Lackierung, versehen ist.

9. Kantenleiste nach einem der Ansprüche 1 bis 8, **dadurch gekennzeichnet, dass** die Grundschicht aus PMMA, PS, ABS, PC, PVC, PET, PP, PP-Copolymer, PE-Copolymer, EVA, EMA oder TPU gefertigt ist.

10. Kantenleiste nach einem der Ansprüche 1 bis 9, **dadurch gekennzeichnet, dass** die Deckschicht aus PMMA, PS, ABS, PC, PVC, PET, PP, PP-Copolymer, PE-Copolymer, EVA, EMA oder TPU gefertigt ist.

11. Kantenleiste nach einem der Ansprüche 1 bis 10, **dadurch gekennzeichnet, dass** die Kantenleiste eine Dicke (d) von 1 mm bis 10 mm aufweist und/oder eine Breite von 2 mm bis 100 mm aufweist.

12. Kantenleiste nach einem der Ansprüche 1 bis 11, **dadurch gekennzeichnet, dass** die mittlere Dicke (d1) der Deckschicht (4) 10 % bis 80 % der mittleren Dicke (d2) der Grundschicht (3) beträgt.

13. Kantenleiste nach einem der Ansprüche 1 bis 12, **dadurch gekennzeichnet, dass** die Strukturierung der Grundschicht (3) eine Nut (8) bildet, in welche ein Einlegeteil (9), z. B. ein LED-Lichtband, einlegbar oder eingelegt ist.

14. Werkstoffplatte, z. B. Möbelplatte, mit einer daran befestigten Kantenleiste nach einem der Ansprüche 1 bis 13.

## Claims

1. An edge strip (1) for coating the narrow face of material panels (2), in particular furniture panels or countertops, with
- a base layer (3) made of a thermoplastic material, the top face (3a) of which is structured, and
- a cover layer (4) made of a transparent or translucent thermoplastic material and arranged on the base layer (3),
wherein the cover layer (4) with its top face (4a) completely or partially forms the visible surface of the edge strip and with its bottom face (4b) completely or partially adjoins the profiled top face (3a) of the base layer (3),
wherein the top face (4a) of the cover layer (4) is formed to be flat or curved and the bottom face (4b) of the cover layer (4) is formed to be complementary to the structuring of the top face (3a) of the base layer (3) over the entire width or part of the width so that the cover layer has a thickness which varies over the width of the strip,
wherein the base layer (3) and the cover layer (4) are produced by coextrusion and bonded together,
and wherein the base layer (3) is colored opaque.

2. The edge strip according to claim 1, **characterized in that** the base layer (3) and the cover layer (4) are firmly bonded to one another.

3. The edge strip according to any one of claims 1 to 2, **characterized in that** the bottom face (3b) of the base layer (3) is provided with a decoration, e.g. a decorative print, a decorative film or a color coating, which is preferably visible through the cover layer and the base layer.

4. The edge strip according to any one of claims 1 to 3, **characterized in that** the top face (3a) of the base layer (3) is provided with a decoration, e.g. a decorative imprint, a decorative film or a paint coating, which is preferably visible through the cover layer (4).

5. The edge strip according to any one of claims 1 to 4, **characterized in that** the bottom face (3b) of the base layer (3) is provided with an adhesion promoting layer (5) or a meltable layer (6) for fixing to a workpiece (2) .

6. The edge strip according to any one of claims 1 to 5, **characterized in that** the bottom face (3b) of the base layer (3) is formed to be flat.

7. The edge strip according to any one of claims 1 to 6, wherein the top face of the cover layer is formed to be smooth.

8. The edge strip according to any one of claims 1 to 7, **characterized in that** the top face (4a) of the cover layer (4) is provided with a finishing, e.g. a film or lacquer coating.

9. The edge strip according to any one of claims 1 to 8, **characterized in that** the base layer is made of PMMA, PS, ABS, PC, PVC, PET, PP, PP copolymer, PE copolymer, EVA, EMA, or TPU.

10. The edge strip according to any one of claims 1 to 9, **characterized in that** the cover layer is made of PMMA, PS, ABS, PC, PVC, PET, PP, PP copolymer, PE copolymer, EVA, EMA, or TPU.

11. The edge strip according to any one of claims 1 to 10, **characterized in that** the edge strip has a thickness (d) of 1 mm to 10 mm or has a width of 2 mm to 100 mm.

12. The edge strip according to any one of claims 1 to 11, **characterized in that** the average thickness (d1) of the cover layer (4) is 10 % to 80 % of the average thickness (d2) of the base layer (3).

13. The edge strip according to any one of claims 1 to 12, **characterized in that** the structuring of the base layer (3) forms a groove (8) into which an insert (9), e.g. an LED light strip, can be inserted or is inserted.

14. A material panel, e.g. furniture panel, with an edge strip according to any one of claims 1 to 13 fixed thereto.

## Revendications

1. Baguette de chant (1) pour le revêtement sur surfaces étroites de plaques de matériau (2), en particulier de plaques de mobilier ou de plaques de travail, comportant
- une couche de base (3) en matériau thermoplastique dont la face supérieure (3a) est structurée et
- une couche de recouvrement (4) disposée sur la couche de base (3) et composée d'une matière thermoplastique transparente translucide,
la couche de recouvrement (4) constituant par sa face supérieure (4a) totalement ou partiellement la surface visible de la baguette de chant et jouxtant par sa face inférieure (4b) totalement ou partiellement la face supérieure profilée (3a) de la couche de base (3),
la face supérieure (4a) de la couche de recouvrement (4) ayant une conformation plane ou bombée et la face inférieure (4b) de la couche de recouvrement (4) étant réalisée, sur toute sa largeur ou sur une partie de sa largeur, de manière à être complémentaire à la structuration de la face supérieure (3a) de la couche de base (3), de sorte que la couche de recouvrement présente une épaisseur variant sur la largeur de la baguette,
la couche de base (3) et la couche de recouvrement (4) étant fabriquées et connectées entre elles par coextrusion
et la couche de base (3) étant teintée de manière couvrante.

2. Baguette de chant selon la revendication 1, **caractérisée en ce que** la couche de (3) et la couche de recouvrement (4) sont connectées entre elles par correspondance de matière.

3. Baguette de chant selon une des revendications 1 à 2, **caractérisée en ce que** la face inférieure (3b) de la couche de base (3) est pourvue d'un décor, par exemple une impression décorative, un film décoratif ou un revêtement coloré, qui est de préférence visible à travers la couche de recouvrement et la couche de base.

4. Baguette de chant selon une des revendications 1 à 3, **caractérisée en ce que** la face supérieure (3a) de la couche de base (3) est pourvue d'un décor visible à travers la couche de recouvrement (4), par exemple une impression décorative, un film décoratif ou un revêtement coloré.

5. Baguette de chant selon une des revendications 1 à 4, **caractérisée en ce que** la face inférieure (3b) de la couche de base (3) est pourvue, pour sa fixation à une pièce (2), d'une couche de promoteur d'adhérence (5) ou d'une couche réalisée par fusion (6).

6. Baguette de chant selon une des revendications 1 à 5, **caractérisée en ce que** la face inférieure (3b) de la couche de base (3) a une conformation plane.

7. Baguette de chant selon une des revendications 1 à 6, **caractérisée en ce que** la face supérieure de la couche de recouvrement a une conformation lisse.

8. Baguette de chant selon une des revendications 1 à 7, **caractérisée en ce que** la face supérieure (4a) de la couche de recouvrement (4) est pourvue d'une finition, par exemple un film ou un vernissage.

9. Baguette de chant selon une des revendications 1 à 8, **caractérisée en ce que** la couche de base est fabriquée en PPMA, PS, ABS, PC, PVC, PET, PP, copolymère de PP, copolymère de PE, EVA, EMA ou TPU.

10. Baguette de chant selon une des revendications 1 à 9, **caractérisée en ce que** la couche de recouvrement est fabriquée en PPMA, PS, ABS, PC, PVC, PET, PP, copolymère de PP, copolymère de PE, EVA, EMA ou TPU.

11. Baguette de chant selon une des revendications 1 à 10, **caractérisée en ce que** la baguette de chant présente une épaisseur (d) de 1 mm à 10 mm et/ou une largeur de 2 mm à 100 mm.

12. Baguette de chant selon une des revendications 1 à 11, **caractérisée en ce que** l'épaisseur moyenne (d1) de la couche de recouvrement (4) représente 10 % à 80 % de l'épaisseur moyenne (d2) de la couche de base (3).

13. Baguette de chant selon une des revendications 1 à 12, **caractérisée en ce que** la structuration de la couche de base (3) forme une rainure (8) qui est insérable ou insérée dans une pièce d'insertion (9), par exemple une bande lumineuse à LED.

14. Plaque de matériau, par exemple de meuble, comportant une baguette de chant fixée dessus selon une des revendications 1 à 13.
